# EUROPEAN PATENT SPECIFICATION

(11) **EP 2 701 486 B1**
(45) Date of publication and mention of the grant of the patent: **25.05.2016**
(21) Application number: 12776600.4
(22) Date of filing: 20.04.2012
(51) Int. Cl.: A01N 57/20, A01N 39/04, A01N 39/02, A01P 13/00

(54) **METHOD FOR CONTROLLING WEEDS IN A FIELD OF COTTON PLANTS**
VERFAHREN ZUR BEKÄMPFUNG VON UNKRÄUTERN IN EINEM FELD VON BAUMWOLLPFLANZEN
MÉTHODE DE LUTTE CONTRE LES MAUVAISES HERBES DANS UN CHAMP DE PLANTS DE COTON

(30) Priority: 27.04.2011 US 201161479538 P
(43) Date of publication of application: 05.03.2014
(73) Proprietor: Dow AgroSciences LLC, Indianapolis, IN 46268 (US)
(72) Inventor: RICHBURG, John S., Headland, Alabama 36345 (US); WRIGHT, Terry R., Westfield, Indiana 46074 (US); BRAXTON, Leon B., Travelers Rest, South Carolina 29690 (US); ROBINSON, Andrew E., Brownsburg, Indiana 46112 (US)
(74) Representative: Beck Greener
(86) International application number: PCT/US2012/034523
(87) International publication number: WO 2012/148820

(56) References cited:
- WO-A2-2007/053482
- WO-A2-2008/051633
- US-A1- 2008 119 361
- US-A1- 2008 119 361
- US-A1- 2010 323 893
- US-B1- 6 436 874
- US-B2- 7 838 733

## Description

### TECHNICAL FIELD

The present invention relates to a method of controlling undesirable vegetation in a field containing an auxin and glyphosate herbicide-resistant cotton crop comprising applying to the location where control is desired a mixture of effective amounts of 2,4-DB and glyphosate.

### BACKGROUND

The use of a mixture of auxinic and glyphosate herbicides to control undesired vegetation in a field of an auxin and glyphosate herbicide-resistant cotton crop may cause transient injury to the crop that could delay its development. Visible transient injury may include a combination of leaf droop, leaf rolling, and petiole curvature-together referred to as epinasty. Other transient injury that may be visible 10 to 14 days after application includes leaf strapping, malformation, and epinasty on leaves. Such transient, early-season injury may result in an undesirable extension of the time for the cotton crop to mature, causing the grower to incur additional expenses and possibly reducing overall crop yield.

The present invention addresses and solves the problems associated with crop injury that results from the application of a mixture of an auxinic herbicide and glyphosate to control undesirable vegetation in a field containing an auxin and glyphosate herbicide-resistant crop including delayed earliness resulting from the early-season herbicide injury.

WO2008/051633 discloses a method of treating weeds in a crop that is auxin-herbicide tolerant. Treatment using a mixture of glyphosate and 2,4-D is exemplified.

US2008/119361 discloses a method of treating weeds by applying a mixture comprising a herbicide and an auxin herbicide. The preferred mixture is glyphosate and dicamba.

### DISCLOSURE OF THE INVENTION

An object of the present invention is a method of controlling undesirable vegetation in a field containing an auxin and a glyphosate herbicide-resistant cotton crop comprising applying to the location where control is desired effective amounts of 2,4-DB and glyphosate.

Another object of the present invention is a method wherein injury to the herbicide-resistant cotton crop is reduced relative to an application of a mixture of an acid equivalent amounts of 2,4-D and glyphosate.

Additional objects and advantages of the present invention will become readily apparent to those skilled in this art from the following detailed description, wherein embodiments of the invention are described simply by way of illustrating the best mode contemplated in carrying out the invention. The description is to be regarded as illustrative in nature and not as restrictive.

### MODE(S) FOR CARRYING OUT THE INVENTION

The present inventions will be described more fully hereinafter. Indeed, these inventions may be embodied in many different forms and should not be construed as limited to the embodiments set forth herein; rather, these embodiments are provided so that this disclosure will satisfy applicable legal requirements. Like numbers refer to like elements throughout.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

The present invention is drawn to a method of controlling undesirable vegetation in a field containing an auxin and glyphosate herbicide-resistant cotton crop comprising applying to the location where control is desired an effective amount of 2,4-DB and glyphosate.

As used in this specification and unless otherwise indicated the term "herbicide" refers to a molecule or combination of molecules that retards or otherwise kills undesirable, unwanted plants; such as, but not limited to, deleterious or annoying weeds, broadleaf plants, grasses, and sedges; and may be used in this manner for crop protection. The phrase "effective amount" means an amount of herbicide necessary to produce an observable desired effect to reduce unwanted plant growth, including the effects of plant necrosis, plant death, growth inhibition, reproduction inhibition, inhibition of proliferation, and removal, destruction, or otherwise diminishing the occurrence and activity of undesirable, unwanted plants. Undesirable, unwanted plants include herbicide-tolerant or herbicide-resistant weeds such as glyphosate-tolerant or glyphosate-resistant weeds.

"Auxin herbicide" includes herbicides having the aryloxyalkanoate chemical structure such as the phenoxyacetate auxins (e.g., 2,4-D and MCPA), phenoxybutanoate auxins (e.g.,2,4-DB and MCPB) and pyridyloxyacetate auxins (e.g., fluroxypyr and triclopyr).

Numerous auxinic herbicide-resistance genes may be employed with the plants of the invention. Cotton crops may be transformed to contain any of a family of resistance genes (designated *AAD*) that code for an enzyme, aryloxyalkanoate dioxygenase (AAD), which then inactivates an auxin herbicide *in planta.* Such herbicide resistance may be conferred by *AAD-1* (originally from *Sphingobium herbicidovorans), AAD-12* (originally from *Delftia acidovorans*), and *AAD-13* genes as disclosed in PCT publication WO 2005/107437, PCT publication WO 2007/053482, and PCT publication US 2010/0251432 A1.

Glyphosate is another herbicide with a different mode of action from auxinic herbicides. Resistance to glyphosate is provided to plants that are transformed with the *EPSPS* gene, and first disclosed in US 4940835A.

A mixture of glyphosate and an auxinic herbicide such as 2,4-DB, is applied by a convenient method to the location where weed control is desired. The "location" is intended to include soil, seeds, and seedlings, as well as established vegetation. Herbicidal activity is exhibited by a mixture of 2,4-DB and glyphosate when it is applied directly to the plant or to the location of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote the intended herbicidal action. Generally, it is preferred to apply mixtures of 2,4-DB and glyphosate post emergence to relatively immature undesirable vegetation to achieve the maximum control of weeds.

Cotton (*Gossypium* spp.) is the world's most important textile fiber crop and is one of the world's most important oilseed crops. Cotton plants provide a source of human food, livestock feed, and raw material in industry. Cottonseed is pressed for cooking oil and the residual cottonseed meal is used for animal feed. Industrial uses of cotton include candlewicks, twine, paper and a multitude of fabric products.

The genus *Gossypium* is very large, currently containing 50 species. Two tetraploid species of *Gossypium* have spinnable seed fibers called lint. These two species are *G*. *hirsutum* (referred to as American Upland cotton) and G. *barbadense* (referred to as Pima cotton).

Cotton is a dicot plant with perfect flowers, i.e., cotton has male, pollen-producing organs and separate female, pollen-receiving organs on the same flower. The cultivated cotton flower is surrounded by three triangular bracts forming what is commonly known as squares. The flower contains an open corolla with five petals, a staminal column bearing clusters of stamens and forming a tube that encloses the style. The compound pistil consists of three to five carpels with stigmas protruding above the anthers. The ovary develops into a three- to five-loculed capsule or boll. From seven to nine seeds are set within each lock or locule. On the day preceding anthesis, a twisted corolla emerges from the square. On the day of anthesis, the corolla opens and pollen shedding occurs. The corolla turns red the day following anthesis and later falls from the plant. Pollination occurs with the opening of the anthers and shedding of pollen on the stigma or with the deposit of pollen on the stigma by insects.

By "plant" is intended whole plants, plant organs (e.g., leaves, stems, roots, etc.), seeds, plant cells, propagules, embryos and progeny of the same. Plant cells can be differentiated or undifferentiated (e.g., callus, suspension culture cells, protoplasts, leaf cells, root cells, phloem cells, and pollen).

"Transgenic plants" or "transformed plants" or "stably transformed" plants, cells or tissues refer to plants that have incorporated or integrated exogenous nucleic acid sequences or DNA fragments into the plant cell. By "stable transformation" is intended that the nucleotide construct introduced into a plant integrates into the genome of the plant and is capable of being inherited by progeny thereof.

The herbicidally active compounds 4-(2,4-dichlorophenoxy) butyric acid or 2,4-DB and glyphosate are described, for example, in Tomlin, Clive (editor) (2009) "The Pesticide Manual," Fifteenth Edition, British Crop Protection Council (BCPC), pages 306-308 and 513-516.

Suitable agricultural adjuvants and carriers that are useful in preparing the herbicidal mixtures of the invention are well known to those skilled in the art. Liquid carriers that can be used include water, toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methanol, ethanol, isopropanol, amyl alcohol, ethylene glycol, propylene glycol, glycerine, and the like. Water is generally the carrier of choice for the dilution of concentrates. Solid carriers that can be used include talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Typical surface-active agents include salts of alkyl sulfates, such as diethanolammonium lauryl sulfate; alkylarylsulfonate salts, such as calciumdodecylbenzenesulfonate; alkylphenol-alkylene oxide addition products, such as nonylphenol-C₁₈ ethoxylate; alcohol-alkylene oxide addition products, such as tridecyl alcohol-C₁₆ ethoxylate; soaps, such as sodium stearate; alkylnaphthalenesulfonate salts, such as sodium dibutylnaphthalenesulfonate; dialkyl esters of sulfosuccinate salts, such as sodium di(2-ethylhexyl)-sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; and salts of mono and dialkyl phosphate esters.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the herbicidal compositions of this invention is generally from about 0.001 to about 98 percent by weight. Concentrations from about 0.01 to about 90 percent by weight are often employed. In compositions designed to be employed as concentrates, the active ingredient is generally present in a concentration from about 5 to about 98 weight percent, preferably about 10 to about 90 weight percent. Such compositions are typically diluted with an inert carrier, such as water, before application. The diluted compositions usually applied to weeds or the location of weeds generally contain about 0.0001 to about 1 weight percent active ingredient and preferably contain about 0.001 to about 0.05 weight percent.

In the methods of the present invention, the application of the 2,4-DB and glyphosate herbicide mixtures can be carried out, equally in pre-sowing, in pre-emergence, and in post-emergence of the crop. Pre-emergence and/or early post-emergence application is preferred. "Pre-emergent" is defined as application of the herbicide during the period prior to emergence of the crop plant from the ground. "Post-emergent" is defined as application of the herbicide during the period after emergence of the crop plant from the ground where the foliage of the crop plant is contacted by the herbicide. Preferably, the 2,4-DB and glyphosate mixture is applied to the cotton crop post-emergence and during the vegetative growth stage of the cotton crop.

The herbicidal mixture of auxin and glyphosate compounds of the present invention can be applied in conjunction with one or more other herbicides to control a wider variety of undesirable vegetation. When used in conjunction with other herbicides, the presently described mixture can be formulated with the other herbicide or herbicides, tank mixed with the other herbicide or herbicides, or applied sequentially with the other herbicide or herbicides. Some of the herbicides that can be employed in conjunction with the mixtures of the present invention include glufosinate, paraquat, ALS-inhibitors (e.g., sulfonylureas, imidazolinones, triazolopyrimidine sulfonanilides, etc.), HPPD inhibitors (*e.g.,* mesotrione, isoxaflutole, etc.), PPO inhibitors (*e.g.,* pyraflufen, fomesafen, etc.), dicamba, bromoxynil, aryloxyalkanoates, aryloxyphenoxypropionoates (commonly referred to as "fops"), auxins, and others, some of which may require genetic engineering to endow the crop with selectivity to these herbicides.

The present mixture can be applied to weeds or their location by the use of conventional ground or aerial dusters, sprayers, and granule applicators, by addition to irrigation water, and by other conventional means known to those skilled in the art.

In one aspect of the present invention, the injury to the herbicide-resistant cotton crop caused by applying effective amounts of 2,4-DB and glyphosate is reduced relative to an application of effective amounts of 2,4-D and glyphosate. Reduction of injury from herbicides advantageously reduces stress on the crop, thereby possibly reducing time for the crop to mature or even causing the grower to save expenses and increase overall crop yield.

While not intending to be bound by any theory, it is hypothesized that 2,4-DB is not a robust herbicide until it undergoes beta-oxidation *in planta.* This additional metabolic step and/or other factors results in increasing the *AAD-*transformed plant's ability to tolerate applications of 2,4-DB compared to 2,4-D. This concept can apply to all *AAD*-transformed crops but is particularly useful when applied to *AAD*-transformed crops, including cotton, that have a lower resistance to 2,4-D.

By "injury" it is meant the percentage of foliage that is epinastic (has leaf droop, leaf rolling, petiole curvature) as visually assessed by one skilled in the art. The reduced injury from 2,4-DB and glyphosate mixtures relative to 2,4-D and glyphosate mixtures is observable within minutes after application of these herbicides and continues to be observable for an extended time period thereafter, such as from 2 hours after application to 30 days after application, including 3 hours after application to 19 days after application and further including 6 hours after application to 24 hours after application.

The subject invention also is applicable to transgenic aryloxyalkanoate herbicide-resistant cotton crops that comprise one or more further herbicide-resistance genes, including, but not limited to, glyphosate, ALS- (imidazolinone, sulfonylurea), aryloxyalkanoate-, HPPD-, PPO-, and glyphosate-resistance genes, so as to provide herbicide-resistant plants compatible with broader and more robust weed control and herbicide-resistance management options.

For post-emergence application, rates of about 0.1 to about 2,240 grams acid equivalent/hectare (g ae/ha) are generally employed, and preferably 1 to about 1,120 g ae/ha. For pre-emergence applications, rates of about 1 to about 2,240 g ae/ha are generally employed. The higher rates designated generally give non-selective control of a broad variety of undesirable vegetation. The lower rates typically give selective control and can be employed in the location of cotton crops. In embodiments of the invention, a preferred application rate of 2,4-DB for postemergence operations is at least 280 g ae/ha, preferably from about 280 g ae/ha to about 2,240 g ae/ha and a preferred application rate of glyphosate for postemergence operations is at least 400 g ae/ha, preferably from about 560 g ae/ha to about 2,300 g ae/ha.

In the previous descriptions, numerous specific details are set forth, such as specific materials, structures, chemicals, processes, etc., to provide a better understanding of the present invention. However, the present invention can be practiced without resorting to the details specifically set forth. In other instances, well-known processing structures have not been described in detail in order not to unnecessarily obscure the present invention.

Only the preferred embodiment of the invention and but a few examples of its versatility are shown and described in the present disclosure. It is to be understood that the present invention is capable of use in various other combinations and environments and is capable of changes or modifications within the scope of the inventive concept as expressed herein.

### EXAMPLES

The following examples are included to demonstrate certain preferred embodiments of the invention. These examples should not be construed as limitations to the claims. It should be appreciated by those of skill in the art that the techniques disclosed in the following examples represent specific approaches used to illustrate disclosed in the following examples represent specific approaches used to illustrate preferred modes for its practice.

Cotton plants transformed with the *AAD-1* or *AAD-12* genes, encode an aryloxyalkanoate dioxygenase (AAD) protein. Cotton plants transformed with the *EPSPS* gene, encode a 5-enolpyruvyl shikimate-3-phosphate synthase (EPSPS) protein. Consequently, cotton plants transformed with both *AAD* and *EPSPS* genes have resistance to both auxin and glyphosate herbicides.

Such transformed plants are used in the following examples to demonstrate resistance to auxin herbicides, specifically 2,4-DB and 2,4-D when mixed with a glyphosate herbicide. *AAD-1, AAD-12,* or *EPSPS* may also be used as a selectable marker during plant transformation and in breeding nurseries. The *AAD-1* gene, itself, for herbicide resistance in plants was first disclosed in WO 2005/107437 (see also US 2009-0093366). The *AAD-12* gene, itself, for herbicide resistance in plants was first disclosed in WO 2007/053482(A2) (see also US 2005731044P). The *EPSPS* gene, itself, for herbicide resistance in plants was first disclosed in US 4940835A.

### EXAMPLE 1

### 2,4-DB and 2,4-D, Mixed with Glyphosate, Provide Similar Weed Control in Cotton Transformed with AAD-1 and EPSPS

An experiment to compare the efficacies of 2,4-DB mixed with glyphosate and 2,4-D mixed with glyphosate to control weeds in cotton transformed with *AAD-1* and *EPSPS* genes was conducted at nine field sites located near Greenville, MS (3 locations); Chula, GA; Macon County, GA; Attapulgus, GA; Memphis, TN; Newport, AR; and Fresno, CA. The experimental design was four replications per site with treatment plots in randomized complete blocks. Each plot had cotton plants in two rows that were 6.1 meters in length. Weed and cotton plants were targeted at five to fifteen cms in height for a single-application with one of four different herbicide mixes (four experimental treatments). The herbicides used were Butyrac 200 (2,4-DB), Weedar 64 (2,4-D), and Durango DMA (glyphosate). The four herbicide treatments were: 840 g ae/ha of 2,4-DB mixed with 840 g ae/ha of glyphosate, 1120 g ae/ha of 2,4-DB mixed with 1120 g ae/ha of glyphosate, 840 g ae/ha of 2,4-D mixed with 840 g ae/ha glyphosate, and 1120 g ae/ha 2,4-D mixed with 1120 g ae/ha glyphosate. Weed species were visually assessed once per week for three weeks after with 840 g ae/ha glyphosate, and 1120 g ae/ha 2,4-D mixed with 1120 g ae/ha glyphosate. Weed species were visually assessed once per week for three weeks after herbicide application for the percentage plants killed or showing severe herbicide-related injury (where 0% represents no activity and 100% represents death of all target plants).

For nearly all targeted species and for each week of measurement, equal or greater levels of control were obtained with the higher application rate of 1120 g ae/ha of 2,4-DB or 2,4-D mixed with 1120 g ae/ha glyphosate. Therefore, based on efficacy, the application rate of 1120 g ae/ha is preferred over 840 g ae/ha for 2,4-DB or 2,4-D mixed with glyphosate to control weeds in this herbicide-tolerant cotton. At 1120 g ae/ha, control was >95% of weed plants killed or seriously injured over three weeks after application with two exceptions (Table 1). For the plants of *Amaranthus* that are resistant to glyphosate (AMAPA gly-res), control was around 70% one week after application, then decreased to 18% with 2,4-DB plus glyphosate and 37% with 2,4-D plus glyphosate two weeks after application. For the species, *Sida spinosa* and *Sida alba* (both in SIDSP), control was 79% with 2,4-DB plus glyphosate one week after application, then increased to 95% two weeks after application-equal to the 95% control with 2,4-D plus glyphosate two weeks after application.

**TABLE 1**

| Percentage Control of Weed Species in *AAD-1*/*EPSPS*-Transformed Cotton, One Week After Application of 2,4-DB or 2,4-D at 1120 g ae/ha Mixed With Glyphosate at 1120 g ae/ha (n=36 plots) | | |
|---|---|---|
| Species^{a} | 2,4-DB + glyphosate | 2,4-D + glyphosate |
| ACCOS | 100 | 100 |
| ACNHI | 99 | 99 |
| AMAPA | 98 | 98 |
| AMAPA GLY-res^{b} | 69 | 72 |
| AMARE | 95 | 100 |
| AMASS^{c} | 98 | 99 |
| CASOB | 100 | 100 |
| DEDTO | 99 | 99 |
| IAQTA | 97 | 99 |
| IPOHG | 99 | 100 |
| IPOSS | 95 | 99 |
| MOLVE | 99 | 99 |
| RCHSC | 99 | 99 |
| SEBEX | 100 | 100 |
| SIDSP^{d} | 79 | 94 |
| SOLNI | 98 | 100 |

| | | |
|---|---|---|
| Abbreviations: AAD, aryloxyalkanoate dioxygenase; g ae/ha, grams acid equivalent per hectare; GLY-res, glyphosate resistant; EPSPS, 5-enolpyruvyl shikimate-3-phosphate synthase ^{a}Species code maintained by the European Plant Protection Organization ^{b}After two weeks, control decreased to 18% and 37% with 2,4-DB + glyphosate and 2,4-D + glyphosate, respectively ^{c}All Amaranthus species excluding AMAPA ^{d}After two weeks, control increased to 95% with both 2,4-DB + glyphosate and 2,4-D + glyphosate | | |

### EXAMPLE 2

### Cotton Plants Transformed With AAD-1 and EPSPS Have Significantly Increased Resistance to 2,4-DB Compared to 2,4-D When Mixed with Glyphosate

Cotton plants transformed with *AAD-1* and *EPSPS* genes were evaluated for resistance to 2,4-DB and 2,4-D herbicide compounds mixed with glyphosate in one greenhouse experiment. The herbicides Butoxone®(2,4-DB) and Weedar 64 (2,4-D) were mixed with Durango DMA (glyphosate) and applied to the cotton plants in four treatments (mix and rates shown in Table 2). The experimental design was four replications of one plant per treatment. The plants were grown in pots and the treatments were not randomized. Plants were at the 3- to 4-leaf stage when sprayed. The sprayed cotton plants were visually assessed for the percentage of foliage showing herbicide-related injury on days-1, 3, and 7 after application.

Results of mean injury observed on cotton plants after spraying with 2,4-DB or 2,4-D with glyphosate are shown in Table 2. The observed injury to the plants was statistically significantly less three days after application for 2,4-DB mixed with glyphosate compared to the identical application rates of 2,4-D mixed with glyphosate.

**TABLE 2**

| Mean Injury Over Time From 2,4-DB or 2,4-D Mixed With Glyphosate Applied Post-Emergence on *AAD-1*/*EPSPS-*Transformed Cotton | | | | |
|---|---|---|---|---|
| | | Mean Injury (%)^{ab} | | |
| Herbicide Mix | Rate (g ae/ha) | 1 DAA | 3 DAA | 7 DAA |
| 2,4-DB + glyphosate | 1120 + 840 | 0 a | 0 a | 7.7 a |
| 2,4-DB + glyphosate | 2240 + 840 | 0 a | 0 a | 11.7 a |
| 2,4-D + glyphosate | 1120 + 840 | 9.3 a,b | 8.7 b | 9.3 a |
| 2,4-D + glyphosate | 2240 + 840 | 6.7 a | 6.3 b | 12.7 a |
| LSD (P=.05) | | 8.7 | 2.8 | 6.1 |

| | | | | |
|---|---|---|---|---|
| Abbreviations: AAD,aryloxyalkanoate dioxygenase; DAA, days after application; g ae/ha, grams acid equivalent per hectare; LSD, least significant difference ^{a}Injury assessed visually as percentage of epinastic cotton-plant foliage; n=4 plants ^{b}Means followed by the same letter do not significantly differ | | | | |

## Claims

1. A method of controlling undesirable vegetation in a field containing an auxin and glyphosate herbicide-resistant cotton crop comprising applying to the location where control is desired a mixture of an effective amount of 2,4-DB and an effective amount of glyphosate.

2. The method of claim 1, wherein the auxin herbicide-resistant cotton crop is an auxin and glyphosate herbicide-resistant cotton crop and wherein injury to the herbicide-resistant cotton crop is reduced relative to an application of a mixture of an acid equivalent amount of 2,4-D and glyphosate.

3. The method of claim 2, wherein injury to the herbicide tolerant cotton crop is reduced relative to an application of a mixture of an acid equivalent amount of 2,4-D and glyphosate at 6 hours after application.

4. The method of claim 2, wherein injury to the herbicide tolerant cotton crop is reduced relative to an application of a mixture of an acid equivalent amount of 2,4-D and glyphosate at 24 hrs after application.

5. The method of claim 1, wherein the auxin herbicide-resistant cotton crop is an aryloxyalkanoate auxin herbicide-resistant cotton crop.

6. The method of claim 2, wherein injury to the herbicide-resistant cotton crop is reduced relative to an application of an equivalent amount of a mixture of 2,4-D and glyphosate at any time period up to three days after application.

7. The method of claim 5, wherein the aryloxyalkanoate herbicide-resistant cotton crop is a transgenic cotton crop.

8. The method of claim 7, wherein the transgenic aryloxyalkanoate herbicide-resistant cotton crop further comprises at least one further herbicide-tolerance gene.

9. The method of claim 5, wherein the aryloxyalkanoate-herbicide-resistant cotton crop comprises a gene coding for AAD -1 (aryloxyalkanoate dioxygenase).

10. The method of claim 5, wherein the aryloxyalkanoate herbicide-resistant cotton crop comprises a gene coding for AAD-12 (aryloxyalkanoate dioxygenase).

11. The method of claim 1, wherein the effective amount of 2,4-DB is at least 840 grams acid equivalent/hectare and wherein the effective amount of glyphosate is at least 400 grams acid equivalent/hectare.

12. The method of claim 1, wherein the effective amount of 2,4-DB is from 840 grams acid equivalent/hectare to 2,240 grams acid equivalent/hectare and wherein the effective amount of glyphosate is from 400 grams acid equivalent/hectare to 2300 grams acid equivalent/hectare.

13. The method of claim 1, wherein the mixture of 2,4-DB and glyphosate is applied to the auxin and glyphosate herbicide-resistant cotton crop post emergent.

14. The method of claim 1, wherein the mixture of 2,4-DB and glyphosate is applied to the auxin and glyphosate herbicide-resistant cotton crop post emergent during the vegetative stage of growth of the auxin and glyphosate herbicide-resistant cotton crop.

15. The method of claim 1, wherein the undesirable vegetation comprises a glyphosate-resistant weed.

16. The method of claim 1 comprising applying an additional herbicide to the location where control is desired.

## Patentansprüche

1. Verfahren zum Kontrollieren von unerwünschter Vegetation in einem Feld mit einer auxin- und glyphosat-herbizid-resistenten Baumwollpflanze, beinhaltend Aufbringen am Ort, an dem Kontrolle erwünscht ist, einer Mischung aus einer wirksamen Menge von 2,4-DB und einer wirksamen Menge von Glyphosat.

2. Verfahren gemäß Anspruch 1, wobei die auxin-herbizid-resistente Baumwollpflanze eine auxin- und glyphosat-herbizid-resistente Baumwollpflanze ist und wobei Schädigung der herbizid-resistenten Baumwollpflanze relativ zu einer Aufbringung einer Mischung aus einer säure-äquivalenten Menge von 2,4-D und Glyphosat reduziert wird.

3. Verfahren gemäß Anspruch 2, wobei Schädigung der herbizid-toleranten Baumwollpflanze relativ zu einer Aufbringung einer Mischung aus einer säure-äquivalenten Menge von 2,4-D und Glyphosat bei 6 Stunden nach Aufbringung reduziert wird.

4. Verfahren gemäß Anspruch 2, wobei Schädigung der herbizid-toleranten Baumwollpflanze relativ zu einer Aufbringung einer Mischung aus einer säure-äquivalenten Menge von 2,4-D und Glyphosat bei 24 Stunden nach Aufbringung reduziert wird.

5. Verfahren gemäß Anspruch 1, wobei die auxin-herbizid-resistente Baumwollpflanze eine aryloxyalkanoat-auxin-herbizid-resistente Baumwollpflanze ist.

6. Verfahren gemäß Anspruch 2, wobei Schädigung der herbizid-resistenten Baumwollpflanze relativ zu einer Aufbringung einer äquivalenten Menge einer Mischung aus 2,4-D und Glyphosat bei jedem Zeitraum bis zu drei Tagen nach Aufbringung reduziert wird.

7. Verfahren gemäß Anspruch 5, wobei die aryloxyalkanoat-herbizid-resistente Baumwollpflanze eine transgene Baumwollpflanze ist.

8. Verfahren gemäß Anspruch 7, wobei die transgenen
aryloxyalkanoat-herbizid-resistente Baumwollpflanze mindestens ein weiteres Herbizid-Toleranz-Gen beinhaltet.

9. Verfahren gemäß Anspruch 5, wobei die aryloxyalkanoat-herbizid-resistente Baumwollpflanze ein für AAD-1 (Aryloxyalkanoat-Dioxygenase) kodierendes Gen beinhaltet.

10. Verfahren gemäß Anspruch 5, wobei die aryloxyalkanoat-herbizid-resistente Baumwollpflanze ein für AAD-12 (Aryloxyalkanoat-Dioxygenase) kodierendes Gen beinhaltet.

11. Verfahren gemäß Anspruch 1, wobei die wirksame Menge von 2,4-DB mindestens 840 Gramm säure-äquivalent/Hektar ist und wobei die wirksame Menge von Glyphosat mindestens 400 Gramm säure-äquivalent/Hektar ist.

12. Verfahren gemäß Anspruch 1, wobei die wirksame Menge von 2,4-DB von 840 Gramm säure-äquivalent/Hektar bis 2240 Gramm säure-äquivalent/Hektar ist und wobei die wirksame Menge von Glyphosat von 400 Gramm säure-äquivalent/Hektar bis 2300 Gramm säure-äquivalent/Hektar ist.

13. Verfahren gemäß Anspruch 1, wobei die Mischung aus 2,4-DB und Glyphosat auf die auxin- und glyphosat-herbizid-resistente Baumwollpflanze im Nachauflauf aufgebracht wird.

14. Verfahren gemäß Anspruch 1, wobei die Mischung aus 2,4-DB und Glyphosat auf die auxin- und glyphosat-herbizid-resistente Baumwollpflanze im Nachauflauf während des vegetativen Wachstumsstadiums der auxin- und glyphosat-herbizid-resistenten Baumwollpflanze aufgebracht wird.

15. Verfahren gemäß Anspruch 1, wobei die unerwünschte Vegetation ein glyphosat-resistentes Unkraut beinhaltet.

16. Verfahren gemäß Anspruch 1, das das Aufbringen eines zusätzlichen Herbizids am Ort, an dem Kontrolle erwünscht ist, beinhaltet.

## Revendications

1. Procédé de contrôle de la végétation indésirable dans un champ de coton résistant à un herbicide composé d'auxine et de glyphosate consistant à appliquer à l'emplacement prévu pour le contrôle un mélange d'une quantité efficace de 2,4-DB et d'une quantité efficace de glyphosate.

2. Procédé selon la revendication 1, où le champ de coton résistant à un herbicide composé d'auxine et de glyphosate et où les dégâts occasionnés au champ de coton résistant aux herbicides sont réduits par rapport grâce à l'application d'un mélange d'une quantité équivalente acide de 2,4-D et de glyphosate.

3. Procédé selon la revendication 2, où les dégâts occasionnés au champ de coton résistant aux herbicides sont réduits par rapport grâce à l'application d'un mélange d'une quantité équivalente acide de 2,4-D et de glyphosate au bout de 6 heures après ladite application.

4. Procédé selon la revendication 2, où les dégâts occasionnés au champ de coton résistant aux herbicides sont réduits par rapport grâce à l'application d'un mélange d'une quantité équivalente acide de 2,4-D et de glyphosate au bout de 24 heures après ladite application.

5. Procédé selon la revendication 1, où le champ de coton résistant à l'auxine est un champ de coton résistant à l'auxine d'aryloxyalkanoate.

6. Procédé selon la revendication 2, où les dégâts occasionnés au champ de coton résistant aux herbicides sont réduits par rapport grâce à l'application d'une quantité équivalente d'un mélange de 2,4-D et de glyphosate jusqu'à trois jours au bout suivant ladite application.

7. Procédé selon la revendication 5, où le champ de coton résistant à l'aryloxyalkanoate est un champ de coton transgénique.

8. Procédé selon la revendication 7, où le champ de coton résistant à l'aryloxyalkanoate transgénique comprend en outre un autre gène tolérant aux herbicides.

9. Procédé selon la revendication 5, où le champ de coton résistant à l'aryloxyalkanoate comprend un gène codant pour AAD-1 (dioxygénase d'aryloxyalkanoate).

10. Procédé selon la revendication 5, où le champ de coton résistant à l'aryloxyalkanoate comprend un gène codant pour AAD-12 (dioxygénase d'aryloxyalkanoate).

11. Procédé selon la revendication 1, où la quantité efficace de 2,4-DB est d'au moins 840 grammes d'équivalent d'acide/hectare et où la quantité efficace de 2,4-DB est d'au moins 400 grammes d'équivalent d'acide/hectare

12. Procédé selon la revendication 1, où la quantité efficace de 2,4-DB est d'au moins 840 grammes d'équivalent d'acide/hectare à 2240 grammes d'équivalent d'acide/hectare et où la quantité efficace de glyphosate est comprise entre 400 grammes d'équivalent d'acide/hectare et 2300 grammes d'équivalent d'acide/hectare.

13. Procédé selon la revendication 1, où le mélange de 2,4-DB et de glyphosate est appliqué au champ de coton résistant aux herbicides auxine et glyphosate après la levée des pousses.

14. Procédé selon la revendication 1, où le mélange de 2,4-DB et de glyphosate est appliqué au champ de coton résistant aux herbicides auxine et glyphosate après la levée des pousses durant la phase de croissance végétative du champ de coton résistant aux herbicides.

15. Procédé selon la revendication 1, où la végétation indésirable comprend une mauvaise herbe résistante au glyphosate.

16. Procédé selon la revendication 1, consistant à appliquer un herbicide supplémentaire à l'endroit auquel le contrôle est souhaité.
